# EUROPEAN PATENT APPLICATION

(11) **EP 4 799 834 A1**
(43) Date of publication of application: **02.09.2026**
(21) Application number: 26156968.5
(22) Date of filing: 06.02.2026
(51) Int. Cl.: B60H 1/00, B60L 58/12

(54) **VEHICLE MODE CONTROL DEVICE, VEHICLE MODE CONTROL METHOD, AND COMPUTER PROGRAM**

(30) Priority: 27.02.2025 JP 2025030642
(71) Applicant: Toyota Jidosha Kabushiki Kaisha, Toyota-shi, Aichi-ken 471-8571 (JP)
(72) Inventor: Itoh, Takuya, Toyota-shi, 471-8571 (JP)
(74) Representative: J A Kemp LLP

(57) **Abstract**

The vehicle mode control device for controlling a mode of a vehicle (1), includes a mode setting part (34) configured to set the mode of the vehicle (1) to a state maintenance mode for maintaining a vehicle state in which power is supplied to an air conditioner (7) of the vehicle (1) and a display in the vehicle (1) but not to a drivetrain of the vehicle (1) based on an instruction from a user of the vehicle (1), and a charge state detection part (35) configured to detect a charge state of a main battery (14) of the vehicle (1). The mode setting part (34) is configured to allow execution of the state maintenance mode regardless of a value of an SOC of the main battery (14), when the main battery (14) of the vehicle (1) is being charged.

## Description

### TECHNICAL FIELD

The present invention relates to a vehicle mode control device, a vehicle mode control method, and a computer program.

### BACKGROUND ART

Patent Literature 1 discloses that when a sleeping state is detected, an air conditioner of a vehicle is controlled so as to create a state suitable for a user to sleep comfortably inside the vehicle.

### CITATION LIST

### PATENT LITERATURE

PTL 1 Japanese Unexamined Patent Publication (Kokai) No. 2023-031630

### SUMMARY

### TECHNICAL PROBLEM

Even in situations other than when sleeping inside the vehicle, there exist needs to maintain operation of the air conditioner and displays of a parked vehicle. Thus, it is desirable for a user of the vehicle to be capable of selecting a vehicle mode which maintains operation of the air conditioner and displays.

In this case, in order to avoid the vehicle running out of power due to the continued use of the air conditioner or displays, uniformly prohibiting the execution of such a vehicle mode when an SOC of a battery of the vehicle is low has been considered. However, since the SOC of the battery is basically recovered when the battery is being charged, it is not always necessary to prohibit the execution of such a vehicle mode in consideration of the battery SOC.

In light of the problem described above, an object of the present invention is to increase the number of situations in which a vehicle mode for maintaining the operation of the air conditioner and displays while a vehicle is stopped can be executed.

### SOLUTION TO PROBLEM

The summary of the present disclosure is as follows.
(1) A vehicle mode control device for controlling a mode of a vehicle, comprising: a mode setting part configured to set the mode of the vehicle to a state maintenance mode for maintaining a vehicle state in which power is supplied to an air conditioner of the vehicle and a display in the vehicle but not to a drivetrain of the vehicle based on an instruction from a user of the vehicle; and a charge state detection part configured to detect a charge state of a main battery of the vehicle, wherein the mode setting part is configured to allow execution of the state maintenance mode regardless of a value of an SOC of the main battery, when the main battery of the vehicle is being charged.
(2) The vehicle mode control device described in above (1), wherein the mode setting part is configured to allow execution of the state maintenance mode regardless of the SOC value, when the SOC is being increased due to charging of the main battery.
(3) The vehicle mode control device described in above (1) or (2), wherein when the state maintenance mode is being executed during charging of the main battery, the charge state detection part is configured to display on the display the value of the SOC, which changes in accordance with charging of the main battery.
(4) The vehicle mode control device described in any one of above (1) to (3), wherein when charging of the main battery is completed in a state in which the state maintenance mode is being executed, the mode setting part is configured to confirm with the user whether to continue the state maintenance mode.
(5) The vehicle mode control device described in above (4), wherein when the user is outside the vehicle, the mode setting part is configured to confirm with the user whether to continue the state maintenance mode via a mobile terminal of the user.
(6) The vehicle mode control device described in any one of above (1) to (3), wherein when charging of the main battery is completed in a state in which the state maintenance mode is being executed, the mode setting part is configured to continue the state maintenance mode when the SOC is equal to or greater than a predetermined value, and end the state maintenance mode when the SOC is less than the predetermined value.
(7) A vehicle mode control method executed by a computer, comprising: setting a mode of a vehicle to a state maintenance mode for maintaining a vehicle state in which power is supplied to an air conditioner of the vehicle and a display within the vehicle but not to a drivetrain of the vehicle based on an instruction from a user of the vehicle; detecting a charge state of a main battery of the vehicle; and allowing execution of the state maintenance mode regardless of a value of an SOC of the main battery, when the main battery of the vehicle is being charged.
(8) A computer program causing a computer to: set a mode of a vehicle to a state maintenance mode for maintaining a vehicle state in which power is supplied to an air conditioner of the vehicle and a display within the vehicle but not to a drivetrain of the vehicle based on an instruction from a user of the vehicle; detect a charge state of a main battery of the vehicle; and allow execution of the state maintenance mode regardless of a value of an SOC of the main battery, when the main battery of the vehicle is being charged.

### ADVANTAGEOUS EFFECTS OF INVENTION

According to the present invention, it is possible to increase the number of situations in which a vehicle mode for maintaining the operation of the air conditioner and displays while a vehicle is stopped can be executed.

### BRIEF DESCRIPTION OF DRAWINGS

FIG. 1 is a schematic configuration view of a connected system including a vehicle equipped with a vehicle mode control device according to the present embodiment.
FIG. 2 is a schematic configuration view of a vehicle mode control system including the vehicle mode control device according to the embodiment of the present invention.
FIG. 3 is a view schematically showing an interior of a vehicle in front of the driver's seat and passenger seat.
FIG. 4 is a view schematically showing the flow of power between electrical components of a vehicle.
FIG. 5 is a view showing the transition of power supply states in a vehicle.
FIG. 6 is a functional block diagram of a processor of an ECU.
FIG. 7 shows an example of a confirmation screen for confirming whether to end a state maintenance mode.
FIG. 8 shows an example of a confirmation screen for confirming whether to transition the power supply state.
FIG. 9 is a flowchart showing a control routine of mode setting processing of a first embodiment of the present invention.
FIG. 10 is a flowchart showing a control routine of mode setting processing of a second embodiment of the present invention.
FIG. 11 is a flowchart showing a control routine of mode continuation confirmation processing of a third embodiment of the present invention.
FIG. 12 shows an example of a confirmation screen for confirming whether to continue the state maintenance mode.
FIG. 13 is a flowchart showing a control routine of mode continuation judgment processing of a fourth embodiment of the present invention.

### DESCRIPTION OF EMBODIMENTS

The embodiments of the present invention will be described in detail below with reference to the drawings. Note that in the following description, identical constituent elements have been assigned common reference signs.

### <First Embodiment>

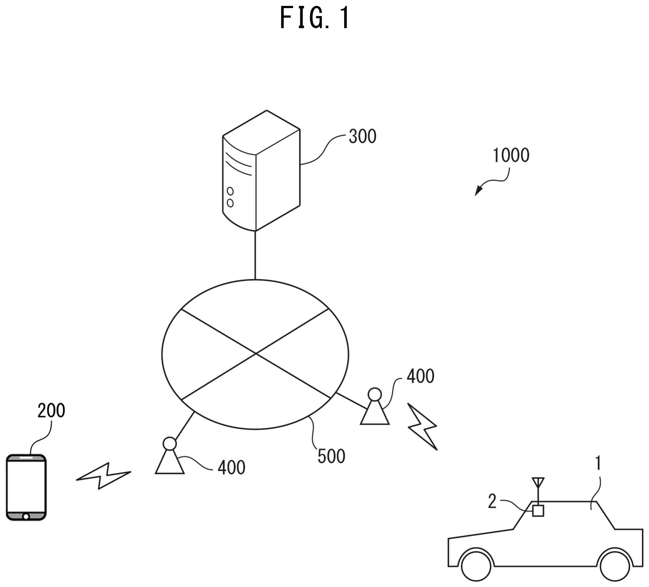

FIG. 1 is a schematic configuration view of a connected system 1000 which includes a vehicle 1 equipped with a vehicle mode control device according to the present embodiment. The connected system 1000 includes the vehicle 1, a mobile terminal 200, and a server 300. The vehicle 1 and the mobile terminal 200 communicate with the server 300 via a wireless base station 400 and a communication network 500, respectively. In the present embodiment, the vehicle 1 is a four-wheeled automobile.

The mobile terminal 200 is owned by the user of the vehicle 1 and includes, for example, at least one of a smartphone, a tablet terminal, a smart watch, and smart glasses. The mobile terminal 200 includes a processor for performing various processes on the mobile terminal 200, input equipment (touch panel, operation buttons, microphone, etc.), output equipment (display, speaker, etc.), and a communication module. The communication module of the mobile terminal 200 accesses the wireless base station 400 to connect the mobile terminal 200 to the communication network 500 via the wireless base station 400. Communication between the mobile terminal 200 and the wireless base station 400 is performed based on a known wireless communication standard (for example, 3G, LTE, 4G, 5G, 6G, etc.).

The server 300 is provided outside the vehicle 1 and includes a communication interface, storage, memory, a processor, etc. The server 300 may be composed of a plurality of computers. The server 300 is operated by, for example, the manufacturer of the vehicle 1, and is also referred to as a center.

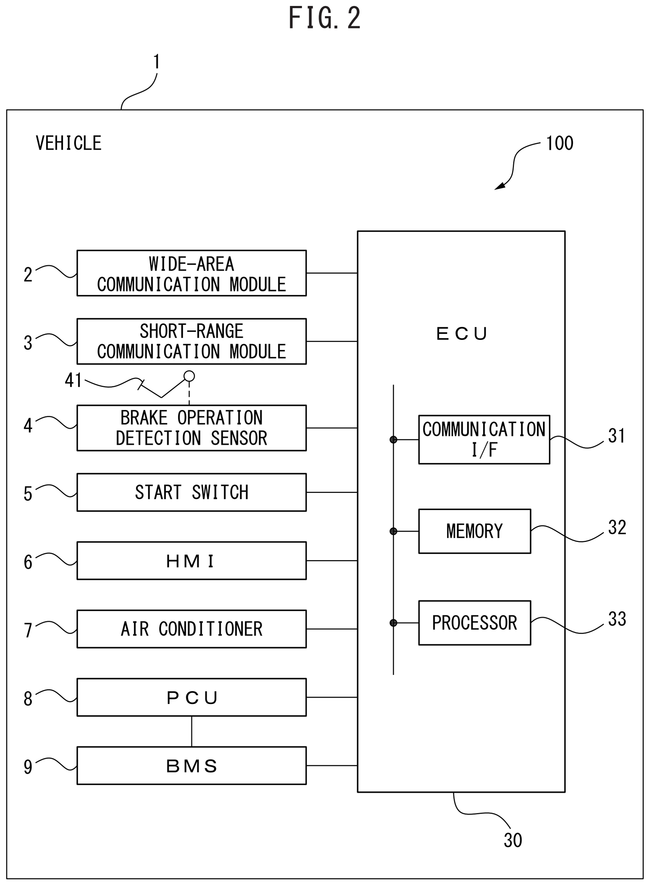

FIG. 2 is a schematic configuration view of a vehicle mode control system 100 which includes the vehicle mode control device according to an embodiment of the present invention. The vehicle mode control system 100 is mounted on the vehicle 1.

As shown in FIG. 2, the vehicle mode control system 100 includes a wide-area communication module 2, a short-range communication module 3, a brake operation detection sensor 4, a start switch 5, a human machine interface (HMI) 6, an air conditioner 7, a power control unit (PCU) 8, a battery management system (BMS) 9, and an electronic control unit (ECU) 30. The wide-area communication module 2, the short-range communication module 3, the brake operation detection sensor 4, the start switch 5, the HMI 6, the air conditioner 7, the PCU 8, and the BMS 9 are electrically connected to the ECU 30 via an in-vehicle network conforming to a standard such as a controller area network (CAN) or Ethernet.

The ECU 30 executes various controls of the vehicle 1. As shown in FIG. 2, the ECU 30 includes a communication interface 31, a memory 32, and a processor 33. The communication interface 31 and the memory 32 are connected to the processor 33 via signal lines. Though one ECU 30 is provided in the present embodiment, a plurality of ECUs may be provided for each function. The communication interface 31, the memory 32, and the processor 33 may be constituted by a single integrated circuit, or may each be constituted by a separate circuit.

The communication interface 31 includes an interface circuit for connecting the ECU 30 to the in-vehicle network. The ECU 30 is connected to other vehicle-mounted equipment via the communication interface 31. In the present embodiment, the communication interface 31 transmits signals received from the wide-area communication module 2, the short-range communication module 3, the brake operation detection sensor 4, the start switch 5, the HMI 6, the PCU 8, and the BMS 9 to the processor 33. Further, the communication interface 31 transmits signals output from the processor 33 to the wide-area communication module 2, the short-range communication module 3, the HMI 6, the air conditioner 7, the PCU 8, and the BMS 9.

The memory 32 includes, for example, volatile semiconductor memory (such as dynamic random access memory (DRAM) or static random access memory (SRAM)) and non-volatile semiconductor memory (such as read-only memory (ROM), electrically erasable programmable read-only memory (EEPROM), or flash memory). The memory 32 stores temporary data, computer programs (control programs for the ECU 30) used for various processes by the processor 33, set data for the ECU 30, log data, vehicle information, etc. The memory 32 is an example of a storage unit.

The processor 33 includes one or more central processing units (CPUs) and peripheral circuits therefor. The processor 33 executes computer programs stored in the memory 32. The processor 33 may further include other arithmetic circuits such as a logic operation unit, a numerical operation unit, or a graphics processing unit. On-board components which are connected to the ECU 30 will be described below.

The wide-area communication module 2 enables wide-area wireless communication between the vehicle 1 and external devices (for example, a server 300) of the vehicle 1. The wide-area communication module 2 accesses the wireless base station 400 to connect the vehicle 1 to the communication network 500 via the wireless base station 400. Communication between the vehicle 1 and the wireless base station 400 is based on a known wireless communication standard (for example, 3G, LTE (Long Term Evolution), 4G, 5G, 6G, etc.). The wide-area communication module 2 is, for example, a data communication module (DCM).

The short-range communication module 3 enables short-range wireless communication between the vehicle 1 and the mobile terminal 200 of the user of the vehicle 1. The short-range communication module is a wireless module which complies with short-range communication standards such as BLE (Bluetooth Low Energy) and NFC (Near Field Communication). The mobile terminal 200 can function as a digital key for the vehicle 1 by directly communicating with the vehicle 1 via the short-range communication module 3. Specifically, the user of the vehicle 1 can control the door locks of the vehicle 1 using the mobile terminal 200.

The brake operation detection sensor 4 is provided on a brake pedal 41 of the vehicle 1 and detects operation of the brake pedal 41 by the user of the vehicle 1. For example, the brake operation detection sensor 4 may be constituted by a pressure sensor for detecting the pressure applied to the brake pedal 41, an angle sensor for detecting the rotation angle or displacement of the brake pedal 41, an electric switch for generating an on/off signal in response to depression of the brake pedal 41, etc. The brake operation detection sensor 4 may be constituted by a noncontact sensor such as an optical sensor or a magnetic sensor. The output of the brake operation detection sensor 4 is transmitted to the ECU 30.

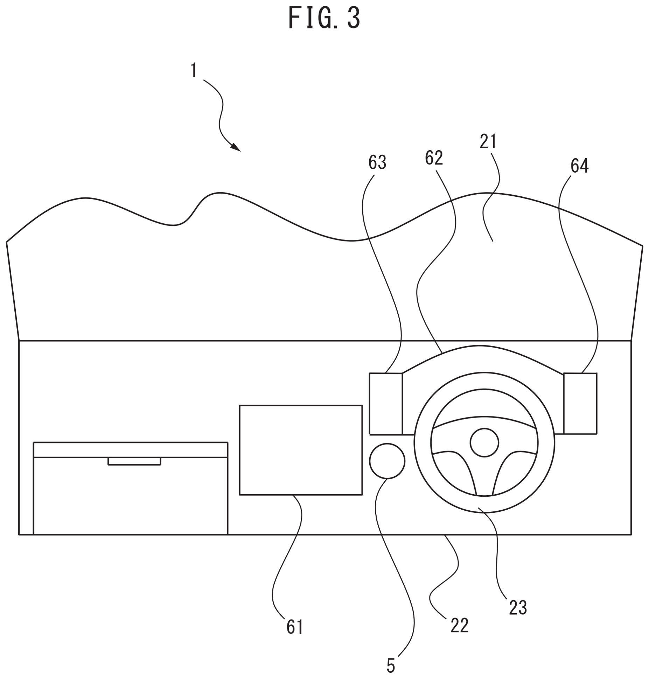

FIG. 3 is a view schematically illustrating the interior of the vehicle 1 in front of the driver's seat and passenger seat. A right-hand drive vehicle 1 is shown in FIG. 3. As shown in FIG. 3, the start switch 5 is located on a dashboard 22 below a windshield 21. For example, the start switch 5 is located near the driver's seat so as to be operable by the user (for example, the driver) of the vehicle 1, and more specifically, near a steering wheel 23 (to the left of the steering wheel 23 in the example of FIG. 3). The start switch 5 is, for example, a push-button switch. When pressed by the user of the vehicle 1, the start switch 5 outputs a signal corresponding to the pressing operation of the user. The output of the start switch 5 is transmitted to the ECU 30.

The HMI 6 is installed in the vehicle cabin and exchanges information between the vehicle 1 and the user of the vehicle 1. The HMI 6 includes input equipment for receiving input from the user of the vehicle 1 and output equipment for issuing notifications to the user of the vehicle 1. The input equipment includes, for example, at least one of a touch panel, operation buttons, operation switches, and a microphone. Information input to the input equipment of the HMI 6 by the user of the vehicle 1 is transmitted to the ECU 30. The output equipment includes at least one of a display device (for example, a display), a warning light, a speaker, a buzzer, and a vibration unit. The output equipment of the HMI 6 issues notifications to the user of the vehicle 1 regarding information corresponding to the signals transmitted from the ECU 30.

As shown in FIG. 3, in the present embodiment, the HMI 6 includes a multimedia display (hereinafter referred to as an "MM display") 61, a meter display 62, a left-side operation display 63, and a right-side operation display 64. These displays are provided inside the vehicle (specifically, near the driver's seat) so as to be visible by the user of the vehicle 1, and display various information to the user of the vehicle 1 based on the signals transmitted from the ECU 30.

In the present embodiment, the MM display 61 is incorporated into the portion of the dashboard 22 between the driver's seat and the passenger seat, i.e., the center console. In this case, the MM display 61 is also referred to as a center display. The MM display 61 is the largest display in the vehicle cabin and displays multimedia information, map information, screens for various settings of the vehicle 1, etc. The MM display 61 is constituted by a touch panel liquid crystal display (LCD: Liquid Crystal Display) or organic EL (Electro Luminescence) display operable by the user of the vehicle 1. Thus, the MM display 61 functions as input equipment and output equipment.

The meter display 62 is arranged in a position which is easily visible by the user of the vehicle 1 while driving the vehicle 1. Specifically, the meter display 62 is incorporated as an instrument panel in the dashboard 22 in front of the steering wheel 23, i.e., in front of the driver's seat. The meter display 62 displays status information of the vehicle 1, and specifically, information necessary for driving the vehicle 1, such as vehicle speed, the SOC (State of Charge) of the main battery, which will be described later, and warning lights. The meter display 62 functions as output equipment and is constituted by, for example, an LCD or an organic EL display. Note that the meter display 62 may be constituted by a touch-panel LCD or organic EL display operable by the user, and may function as both input equipment and output equipment.

The left-side operation display 63 is arranged in a position which is easily operable with the left hand of the user of the vehicle 1 while driving the vehicle 1, and the right-side operation display 64 is arranged in a position which is easily operable with the right hand of the user of the vehicle 1 while driving the vehicle 1. The left-side operation display 63 and the right-side operation display 64 are arranged on either side of the meter display 62, and are arranged in positions symmetrical with respect to a line dividing the steering wheel 23 into left and right halves.

The left-side operation display 63 is arranged adjacent to the meter display 62 on the left side of the steering wheel 23. In the present embodiment, the left-side operation display 63 displays a multimedia operation screen (for example, an audio setting screen, etc.). The left-side operation display 63 is constituted by a touch panel LCD or organic EL display operable by the user of the vehicle 1. Thus, the left-side operation display 63 functions as input equipment and output equipment.

The right-side operation display 64 is arranged adjacent to the meter display 62 on the right side of the steering wheel 23. In the present embodiment, the right-side operation display 64 displays an operation screen for a driving assistance function (for example, a setting screen for adaptive cruise control (ACC)). The right-side operation display 64 is constituted by a touch panel LCD or organic EL display operable by the user of the vehicle 1. Thus, the right-side operation display 64 functions as input equipment and output equipment.

In the present embodiment, the left-side operation display 63 is connected to the left end of the meter display 62, and the right-side operation display 64 is connected to the right end of the meter display 62. Specifically, the left-side operation display 63 and the right-side operation display 64 are formed integrally with the meter display 62. However, the left-side operation display 63 and the right-side operation display 64 may each be separate from the meter display 62.

The air conditioner 7 includes an electric compressor and provides both cooling and heating functions. When providing the cooling function, the air conditioner 7 reduces the temperature inside the vehicle cabin via a heat exchange process using a refrigerant, and when providing the heating function, the air conditioner 7 increases the temperature inside the vehicle cabin using heat pump technology.

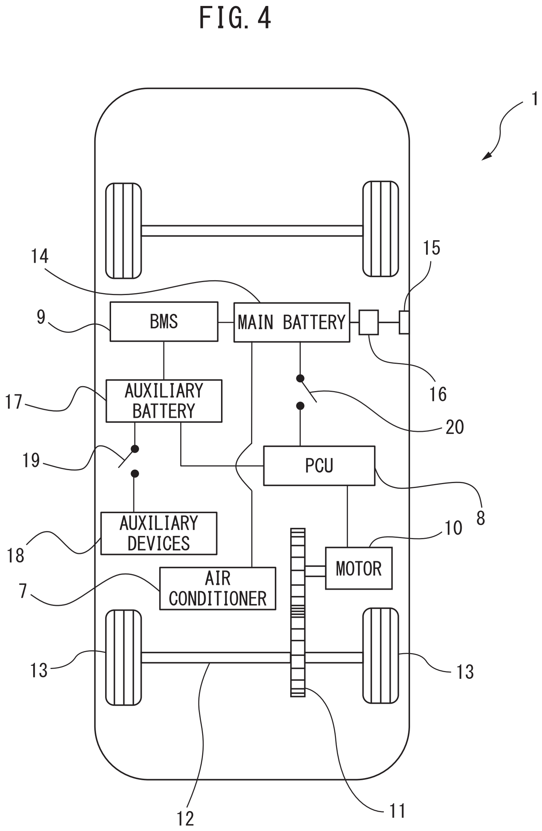

As shown in FIG. 2, the PCU 8 and the BMS 9 are electrically connected and can communicate with each other using a communication protocol such as CAN. The configurations and functions of the PCU 8 and the BMS 9 will be described with reference to FIG. 4.

FIG. 4 is a view schematically illustrating the flow of power between electrical components of the vehicle 1. As shown in FIG. 4, the vehicle 1 further includes a motor 10, a reduction gear 11, axles 12, wheels 13, a main battery 14, a charging port 15, a charger 16, an auxiliary battery 17, auxiliary devices 18, an auxiliary relay 19, and a main relay 20.

In the present embodiment, the vehicle 1 is a so-called battery electric vehicle (BEV), and only the motor 10 functions as a drive device for the vehicle 1. The motor 10 is connected to the reduction gear 11, and the output of the motor 10 is supplied to the reduction gear 11. The output of the motor 10 supplied to the reduction gear 11 is transmitted to the wheels 13 via the axles 12, and drives the wheels 13. Thus, the motor 10 can output power for running the vehicle 1.

The main battery 14 is a rechargeable secondary battery, such as a lithium-ion battery, a nickel-metal hydride battery, an all-solid-state battery, or a sodium-ion battery. The main battery 14 is a high-voltage battery for outputting high-voltage (for example, 200 V to 800 V) DC power. The main battery 14 is charged by power supplied from an external power supply, such as a home power supply or a charging station, or by regenerative power generated when the vehicle 1 decelerates. The charging port 15 is configured so as to receive power from the external power supply, and the charger 16 converts the power supplied to the charging port 15 from the external power supply into power which can be supplied to the main battery 14. The main battery 14 is also referred to as a drive battery or a high-voltage battery.

When the motor 10 outputs power for driving, the electric power stored in the main battery 14 is supplied to the motor 10 via the PCU 8. Specifically, the main battery 14 functions as a drive source for the vehicle 1. The main battery 14 is also connected to the air conditioner 7, and the electric compressor of the air conditioner 7 is operated by the high-voltage electric power supplied from the main battery 14.

The BMS 9 monitors and manages the main battery 14 and includes a sensor module, a control circuit, etc. The sensor module includes a voltage sensor for detecting the voltage of each cell of the main battery 14, a current sensor for detecting the charge/discharge current of the main battery 14, and a temperature sensor for detecting the temperature of the main battery 14. The control circuit estimates the state of the main battery 14 and controls charging and discharging. For example, the control circuit calculates the SOC (State of Charge), SOH (State of Health), and SOP (State of Power) of the main battery 14 based on the output of the sensor module.

The auxiliary battery 17 is a rechargeable secondary battery, and is constituted by, for example, a lead-acid battery or a lithium-ion battery. The auxiliary battery 17 is a low-voltage battery for outputting low-voltage (for example, 12 V) DC power. Specifically, the auxiliary battery 17 outputs power with a lower voltage than the main battery 14. The auxiliary battery 17 is charged by power supplied from the main battery 14. The auxiliary battery 17 is also referred to as a low-voltage battery.

The auxiliary battery 17 is connected to the auxiliary devices 18, and the auxiliary devices 18 operate on low-voltage power supplied from the auxiliary battery 17. The auxiliary devices 18 include communication modules such as the wide-area communication module 2 and the short-range communication module 3, sensors such as the brake operation detection sensor 4, the start switch 5, the HMI 6, lighting devices (headlights, taillights, etc.), power windows, etc.

The auxiliary relay 19 is provided between the auxiliary battery 17 and the auxiliary devices 18. Specifically, the auxiliary devices 18 are connected to the auxiliary battery 17 via the auxiliary relay 19. When the auxiliary relay 19 is closed, the auxiliary battery 17 is electrically connected to the auxiliary devices 18. As a result, power can be supplied from the auxiliary battery 17 to the auxiliary devices 18.

The PCU 8 controls the power of the vehicle 1 and includes an inverter, a DC-DC converter, a boost converter, a control circuit, etc. The inverter is connected to the main battery 14 and the motor 10, and the main battery 14 supplies power to the motor 10 via the inverter. When power is supplied from the main battery 14 to the motor 10, the inverter converts the DC power supplied from the main battery 14 into AC power. Further, the inverter controls the rotation speed and output torque of the motor 10 by adjusting the amount and frequency of the AC power supplied to the motor 10. On the other hand, when regenerative power is supplied from the motor 10 to the main battery 14, the inverter converts the AC power supplied from the motor 10 into DC power.

The DC-DC converter is connected to the main battery 14 and the auxiliary battery 17, and the main battery 14 supplies power to the auxiliary battery 17 via the DC-DC converter. When power is supplied from the main battery 14 to the auxiliary battery 17, the DC-DC converter converts high-voltage power (for example, 200 V to 800 V) into low-voltage power (for example, 12 V). The boost converter boosts the output of the main battery 14 as needed. The control circuit controls the inverter, regenerative braking, etc.

The main relay 20 is provided between the main battery 14 and the PCU 8. Specifically, the PCU 8 is connected to the main battery 14 via the main relay 20. When the main relay 20 is closed, the main battery 14 is electrically connected to the PCU 8. As a result, power can be supplied from the main battery 14 to the PCU 8. When power is supplied from the main battery 14 to the PCU 8, the DC-DC converter of the PCU 8 operates, and power can be supplied from the main battery 14 to the auxiliary battery 17 via the PCU 8. Specifically, the auxiliary battery 17 can be charged using the output power of the main battery 14.

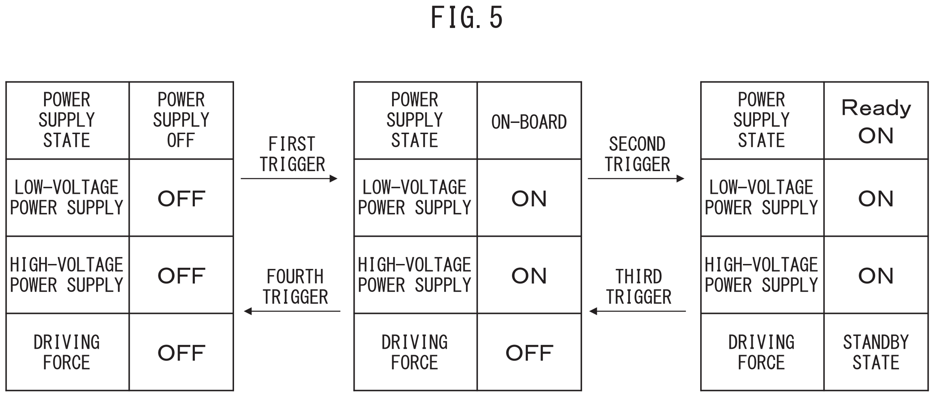

FIG. 5 is a view showing the transition of the power supply state of the vehicle 1. As shown in FIG. 5, the vehicle 1 has three states including a power supply off state, an on-board state, and ready-on state as power supply states. Note that as will be clear from the description below, the power supply state being an "on-board state" does not necessarily require that the user of vehicle 1 (hereinafter simply referred to as "the user") be present in the vehicle cabin.

When the power supply state is the power supply off state, the low-voltage power supply, the high-voltage power supply, and the driving force are all disabled. When the low-voltage power supply is off, the auxiliary relay 19 is open, disabling the power supply between the auxiliary battery 17 and the auxiliary devices 18. When the high-voltage power supply is off, the main relay 20 is open, disabling the power supply between the main battery 14 and the PCU 8. When the driving force is off, the initialization operation of the driving system by the PCU 8 (system self-diagnosis, inverter initialization, etc.) is not complete, and the power supply from the main battery 14 to the motor 10 is not started.

When a first trigger occurs while the power supply state is the power supply off state, the power supply state transitions from the power supply off state to the on-board state. In the present embodiment, the first trigger is the door of vehicle 1 being opened. Thus, when the user unlocks the door of the vehicle 1 and opens the door of the vehicle 1 to board the vehicle 1, the power supply state of the vehicle 1 transitions from the power supply off state to the on-board state.

When the power supply state is the "on-board state," the low-voltage power supply and the high-voltage power supply are turned on, and the driving force is maintained in an off state. When the low-voltage power supply is turned on, i.e., when the low-voltage power supply is enabled, the ECU 30 closes the auxiliary relay 19 using the output power of the auxiliary battery 17. As a result, power supply from the auxiliary battery 17 to the auxiliary devices 18 starts.

When the high-voltage power supply is turned on, i.e., when the high-voltage power supply is enabled, the BMS 9 executes an initialization operation including checking the state of the main battery 14, and after the initialization operation is completed, closes the main relay 20 using the output power of the auxiliary battery 17. As a result, power supply from the main battery 14 to the PCU 8 starts.

Furthermore, since the air conditioner 7 is directly connected to the main battery 14 as shown in FIG. 4, when the high-voltage power supply is turned on, power supply from the main battery 14 to the air conditioner 7 also starts. Note that when the user sets the operation state of the air conditioner 7 to off, power supply from the main battery 14 to the air conditioner 7 is stopped even if the high-voltage power supply is on.

When a second trigger occurs when the power supply state is in the on-board state, the power supply state transitions from the on-board state to the ready-on state. In the present embodiment, the second trigger is the user performing a start operation for the vehicle 1, and two options are provided as the start operation. The first option is a combined operation in which the operation of depressing the brake pedal 41 and the operation of pressing the start switch 5 are combined, and the second option is a single operation of depressing the brake pedal 41. The user selects one of the first option or the second option as the start operation for starting the vehicle 1 via the HMI 6 (for example, the MM display 61). In the present embodiment, in the vehicle 1 in an initial state (for example, the vehicle 1 at the time of shipment), the start operation is set to the first option.

When the first option is set as the start operation, when the user performs the combined operation of the first option, the power supply state transitions from the on-board state to the ready-on state. On the other hand, if the second option is set as the start operation, when the user performs the single operation of the second option, the power supply state transitions from the on-board state to the ready-on state. Note that only one operation method (for example, the first option or the second option) may be set as the start operation of the vehicle 1.

When the power supply state is the ready-on state, the low-voltage power supply and the high-voltage power supply are turned on, and the driving force is put into a standby state. Thus, in order to transition the power supply state of the vehicle 1 to the ready-on state, the PCU 8 executes initialization of the drive system and puts the driving force into a standby state. When the driving force is in a standby state, the initialization of the drive system by the PCU 8 is complete, but power supply from the main battery 14 to the motor 10 is not started. In this state, when the user depresses the brake pedal 41 and shifts the gear shifter of the vehicle 1 into drive (D) mode or reverse (R) mode, the driving force is turned on, and power supply from the main battery 14 to the motor 10 starts.

On the other hand, when the user sets the gear shifter of vehicle 1 to parking (P) mode after the vehicle 1 is running, the driving force changes from on to standby, and power supply from the main battery 14 to the motor 10 is stopped. In this state, when a third trigger occurs, the driving force changes from standby to off, and the power supply state transitions from the ready-on state to the on-board state. Specifically, when a third trigger occurs while the power supply state is the ready-on state, the power supply state transitions from the ready-on state to the on-board state. In the present embodiment, the third trigger is the user pressing the start switch 5. Thus, when the user presses the start switch 5 after setting the gear shifter of vehicle 1 to parking mode, the power supply state transitions from the ready-on state to the on-board state.

When a fourth trigger occurs while the power supply state is in the on-board state, the power supply state transitions from the on-board state to the power supply off state. In the present embodiment, the fourth trigger occurs when the door of vehicle 1 is locked from outside vehicle 1 or when vehicle 1 is in an inactive state for equal to or longer than a threshold time. Thus, when the user exits the vehicle 1 and locks the door of the vehicle 1, the power supply state transitions from the on-board state to the power supply off state. Furthermore, the power supply state transitions from the on-board state to the power supply off state in a situation in which the vehicle 1 is left unattended in a state in which the door of the vehicle 1 is unlocked, or in a situation in which the user is sleeping in the vehicle 1 while parked. Note that the threshold time when the key of the vehicle 1 is inside the vehicle 1 (for example, 30 to 80 minutes) may be different from the threshold time when the key of the vehicle 1 is outside the vehicle 1 (for example, 3 to 10 minutes).

When the power supply of the vehicle 1 is off, the user naturally cannot use the HMI 6 and the air conditioner 7 inside the vehicle. On the other hand, when the power supply state is in the on-board state, the HMI 6 and the air conditioner 7 can be used while avoiding power consumption for driving the vehicle 1. Thus, in some situations when the vehicle 1 is stopped, the user may wish to fix the power supply state to the on-board state. For example, such situations include a situation in which the user is watching desired content on the MM display 61, a situation in which the user uses the vehicle 1 as lodging, or a situation in which the user camps outside the vehicle 1. In these situations, it is desirable to keep the air conditioner 7 running to maintain a comfortable temperature inside the vehicle 1 without turning off the power supply of the vehicle 1.

Thus, in the present embodiment, there is provided a state maintenance mode as a mode of the vehicle 1 selectable by the user, in which power is supplied to the air conditioner of vehicle 1 and the display in vehicle 1, but the vehicle state is maintained such that power is not supplied to the drivetrain of vehicle 1. As a result, the user can enjoy situations such as those described above in a comfortable cabin environment, thereby improving the usability of vehicle 1.

In the present embodiment, the vehicle state in which the power supply state is set to the on-board state corresponds to a vehicle state in which power is supplied to the air conditioner of vehicle 1 and the displays in vehicle 1, but not to the drivetrain of vehicle 1. Specifically, in the state maintenance mode, the power supply state is fixed to the on-board state, and even if the fourth trigger occurs, the power supply state does not transition from the on-board state to the power supply off state. In other words, in the state maintenance mode, the transition of the power supply state from the on-board state to the power supply off state is disabled. Note that the displays of the HMI 6 (the MM display 61, the meter display 62, the left-side operation display 63, and the right-side operation display 64 in the present embodiment) are examples of displays in vehicle 1.

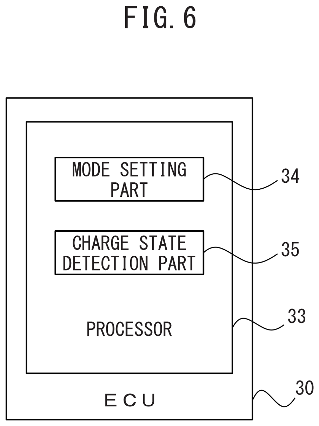

In the present embodiment, the ECU 30 functions as a vehicle mode control device for controlling the mode of the vehicle 1. FIG. 6 is a functional block diagram of the processor 33 of the ECU 30. As shown in FIG. 6, the processor 33 includes a mode setting part 34 and a charge state detection part 35. The mode setting part 34 and the charge state detection part 35 are functional modules realized by the processor 33 of the ECU 30 executing computer programs stored in the memory 32 of the ECU 30. Note that these functional modules may each be realized by a dedicated arithmetic circuit provided in the processor 33. The ECU 30 is an example of a vehicle mode control device.

The mode setting part 34 sets the mode of the vehicle 1. In particular, in the present embodiment, the mode setting part 34 sets the mode of the vehicle 1 to the state maintenance mode for maintaining a vehicle state in which the power supply state of the vehicle 1 is set to the on-board state, based on instructions from the user. For example, the user instructs the mode of the vehicle 1 via the HMI 6. As a specific example, the user instructs the mode of the vehicle 1 by operating a mode selection screen displayed on the MM display 61 of the HMI 6. In this case, when the user selects the mode selection icon for the state maintenance mode, the mode setting part 34 sets the mode of the vehicle 1 to the state maintenance mode. Note that the user may instruct the mode of the vehicle 1 via another display of the HMI 6 (for example, the meter display 62, the left-side operation display 63, or the right-side operation display 64). Further, the user may instruct the mode of the vehicle 1 via the HMI 6 using voice input or the like.

The mode setting part 34 ends the state maintenance mode when a predetermined condition is established in the state maintenance mode. In the present embodiment, the predetermined condition includes the following first to fifth end conditions, and the mode setting part 34 ends the state maintenance mode when any one of the first to fifth end conditions is established.

The first end condition is that the SOC of the main battery 14 has fallen to a predetermined threshold. In this case, the mode setting part 34 ends the state maintenance mode when the SOC of the main battery 14 calculated by the BMS 9 drops to the predetermined threshold. The threshold is predetermined and is set to a value, for example, between 10% and 30%. By setting the first end condition as the end condition of the state maintenance mode, the vehicle 1 can be prevented from running out of power due to continued execution of the state maintenance mode.

The second end condition is that an abnormality is detected in the vehicle 1. In this case, the mode setting part 34 ends the state maintenance mode when an abnormality is detected in the vehicle 1. Abnormalities in the vehicle 1 include, for example, abnormalities detected by self-diagnosis of the vehicle 1, communication disruptions, etc. By setting the second end condition as the end condition of the state maintenance mode, the state maintenance mode can be prevented from continuing even when the vehicle 1 is in an abnormal state.

The third end condition is that the user requests to end the state maintenance mode via the HMI 6. In this case, the mode setting part 34 ends the state maintenance mode when the user requests to end the state maintenance mode via the HMI 6. For example, the user requests to end the state maintenance mode by operating the MM display 61 of the HMI 6 (for example, by selecting an end button displayed on the MM display 61). Alternatively, the third end condition may be that the user requests to end the state maintenance mode via the mobile terminal 200. In this case, a notification of the end request is transmitted from the mobile terminal 200 to the vehicle 1 via the server 300.

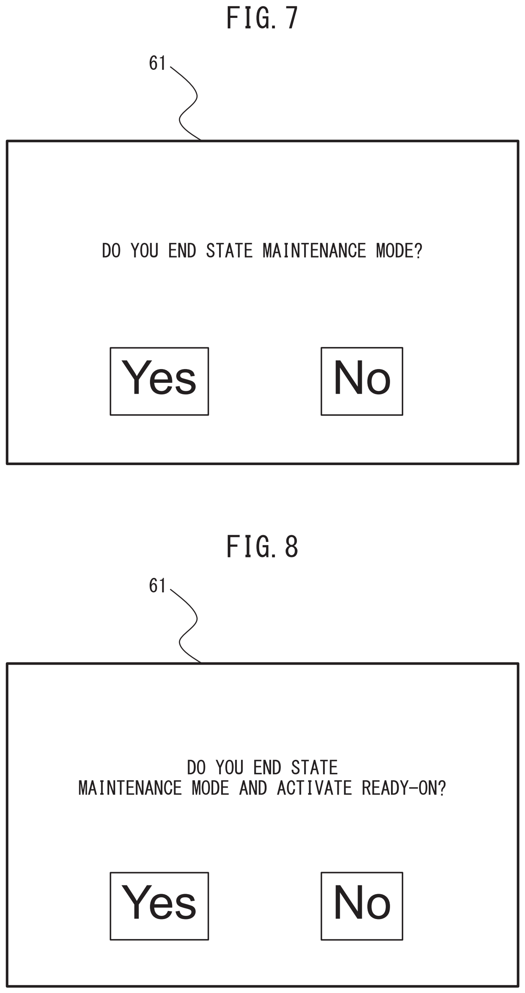

The fourth end condition is that the user presses the start switch 5. In this case, the mode setting part 34 ends the state maintenance mode when the user presses the start switch 5. Note that in order to avoid the user unintentionally ending the mode due to an erroneous operation of the start switch 5, the fourth end condition may be that the user presses the start switch 5 and approves the end of the state maintenance mode. In this case, the user approves the end of the state maintenance mode via the HMI 6. As a specific example, when the start switch 5 is pressed, the mode setting part 34 displays a confirmation screen on the HMI 6 (for example, the MM display 61) to confirm whether to end the state maintenance mode, and the user selects whether to end the state maintenance mode via the HMI 6. FIG. 7 shows an example of the confirmation screen for confirming whether to end the state maintenance mode.

The fifth end condition is that the user performs a start operation for the vehicle 1. In this case, the mode setting part 34 ends the state maintenance mode when the user performs a start operation. When the first option is set as the start operation, the user both depresses the brake pedal 41 and presses the start switch 5, and when the second option is set as the start operation, the user only depresses the brake pedal 41.

When the second option is set as the start operation, the fifth end condition may be that the user depresses the brake pedal 41 and approves the transition of the power supply state, in order to prevent the user from unintentionally ending the mode due to an erroneous operation of the brake pedal 41. In this case, the user approves the transition of the power supply state from the on-board state to the ready-on state via the HMI 6. As a specific example, when the brake pedal 41 is depressed, the mode setting part 34 displays a confirmation screen on the HMI 6 (for example, the MM display 61) to confirm whether to transition the power supply state, and the user selects whether to transition the power supply state via the HMI 6. FIG. 8 shows an example of the confirmation screen for confirming whether to transition the power supply state.

As described above, the first end condition is established when the SOC of the main battery 14 falls to a predetermined threshold. Thus, prohibiting execution of the state maintenance mode when the SOC of the main battery 14 is equal to or lower than the threshold has been considered. However, since the SOC of the main battery 14 is basically recovered during charging of the main battery 14, it is not always necessary to prohibit execution of the state maintenance mode in consideration of the SOC of the main battery 14.

Thus, in the present embodiment, the charge state detection part 35 detects the charge state of the main battery 14, and the mode setting part 34 changes the condition for allowing execution of the state maintenance mode depending on whether or not the main battery 14 is charged. Specifically, in the case in which the main battery 14 is not charged, the mode setting part 34 allows execution of the state maintenance mode when the SOC of the main battery 14 is higher than a threshold, and prohibits execution of the state maintenance mode when the SOC of the main battery 14 is equal to or lower than the threshold. On the other hand, when the main battery 14 is being charged, the mode setting part 34 allows execution of the state maintenance mode regardless of the value of the SOC of the main battery 14. As a result, the number of situations in which the state maintenance mode can be executed can be increased, which ultimately improves the user experience in the vehicle 1.

The charge state detection part 35 judges whether the main battery 14 is being charged based on, for example, state information (for example, polarity of charge/discharge current, change in battery voltage, change in battery temperature, etc.) of the main battery 14 output by the BMS 9. Note that the charge state detection part 35 may judge whether the main battery 14 is being charged by acquiring the state of the supplied power, etc., via communication with an external charger (for example, EVSE: Electric Vehicle Supply Equipment).

Furthermore, in the present embodiment, when the state maintenance mode is executed during charging of the main battery 14, the charge state detection part 35 displays on the HMI 6 the value of the SOC of the main battery 14, which changes as the main battery 14 is charged. As a result, the user can determine whether to continue the state maintenance mode while taking into consideration the recovery status of the SOC of the main battery 14. In particular, in the present embodiment, the charge state detection part 35 displays the value of the SOC of the main battery 14, which changes as the main battery 14 is charged, on the MM display 61 of the HMI 6, which displays a screen related to the state maintenance mode.

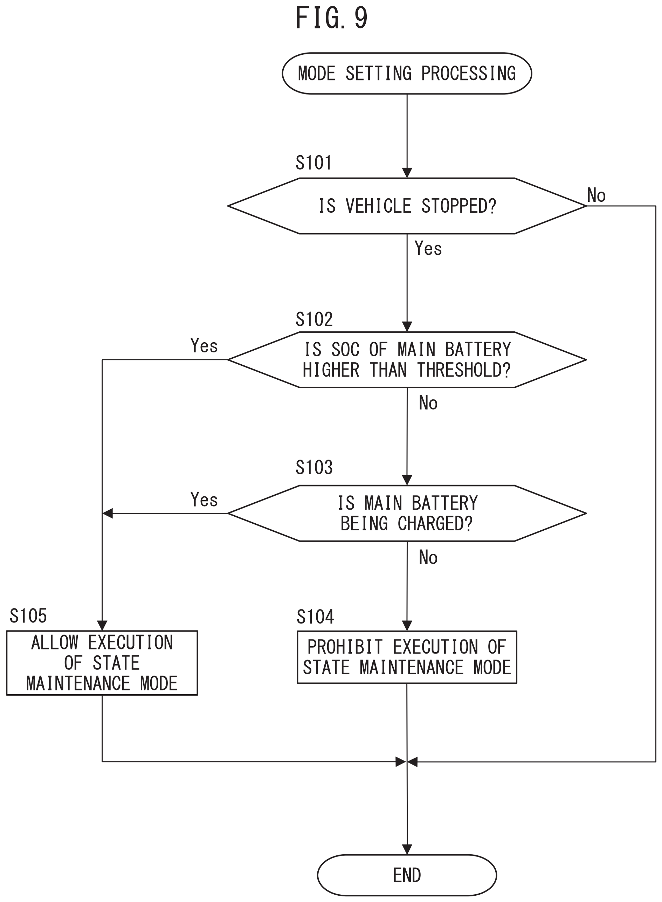

The processing flow when the control described above is executed will be described below with reference to FIG. 9. FIG. 9 is a flowchart showing the control routine of mode setting processing of the first embodiment of the present invention. The present control routine is repeatedly executed by the processor 33 of the ECU 30 in accordance with a computer program stored in the memory 32 of the ECU 30.

First, in step S101, the mode setting part 34 of the processor 33 judges whether the vehicle 1 is stopped. For example, the mode setting part 34 judges that the vehicle 1 is stopped when the shift gear of the vehicle 1 is set to the parking mode. Note that the mode setting part 34 may judge whether the vehicle 1 is stopped based on the output of a vehicle speed sensor provided in the vehicle 1. When it is judged that the vehicle 1 is not stopped, the present control routine ends.

On the other hand, when it is determined in step S101 that the vehicle 1 is stopped, the present control routine proceeds to step S102. In step S102, the mode setting part 34 judges whether the SOC of the main battery 14 is higher than a threshold. At this time, the mode setting part 34 obtains the SOC calculated by the BMS 9 and compares the SOC with the threshold. When it is determined that the SOC is equal to or less than the threshold, the present control routine proceeds to step S103.

In step S103, the charge state detection part 35 of the processor 33 judges whether the main battery 14 is being charged. When it is judged that the main battery 14 is not being charged, the present control routine proceeds to step S104.

In step S104, the mode setting part 34 prohibits execution of the state maintenance mode. For example, the mode setting part 34 prohibits execution of the state maintenance mode by disabling or making it impossible for the user to start the state maintenance mode. As a specific example of this case, the mode setting part 34 grays out the start button for the state maintenance mode displayed on the HMI 6 (for example, the MM display 61). Alternatively, the mode setting part 34 may not display the start button for the state maintenance mode on the HMI 6. After step S104, the present control routine ends.

When execution of the state maintenance mode is prohibited, the mode of the vehicle 1 is maintained in the normal mode. In the normal mode, the power supply state of the vehicle 1 is set in accordance with the transition of the power supply state described above with reference to FIG. 5. For example, if the fourth trigger occurs when the power supply state is in the on-board state, the power supply state transitions from the on-board state to power supply off.

On the other hand, when it is determined that the SOC of the main battery 14 is higher than the threshold in step S102, or when it is determined that the main battery 14 is being charged in step S103, the present control routine proceeds to step S105. In step S105, the mode setting part 34 allows execution of the state maintenance mode. For example, the mode setting part 34 displays the start button for the state maintenance mode on the HMI 6 (for example, the MM display 61). In this case, when the start button for the state maintenance mode is selected by the user, the mode setting part 34 executes the state maintenance mode, and the mode of the vehicle 1 is set to the state maintenance mode.

### <Second Embodiment>

The configuration and control of the vehicle mode control device according to the second embodiment are basically identical to the configuration and control of the vehicle mode control device according to the first embodiment, except for the points described below. Thus, the second embodiment of the present invention will be described below, focusing on the differences from the first embodiment.

As described above, during charging of the main battery 14, the SOC of the main battery 14 generally recovers. However, when the main battery 14 is charged using low-output power such as from a home power supply, there is a risk that the power consumed by the operation of the air conditioner 7 and HMI 6 will exceed the power supplied to the vehicle 1 from the external power supply.

Thus, in the second embodiment, when the SOC of the main battery 14 is being increased by charging of the main battery 14, the mode setting part 34 allows execution of the state maintenance mode regardless of the value of the SOC of the main battery 14. As a result, the allowance of execution of the state maintenance mode even though the SOC of the main battery 14 has not been recovered by charging of the main battery 14 can be prevented.

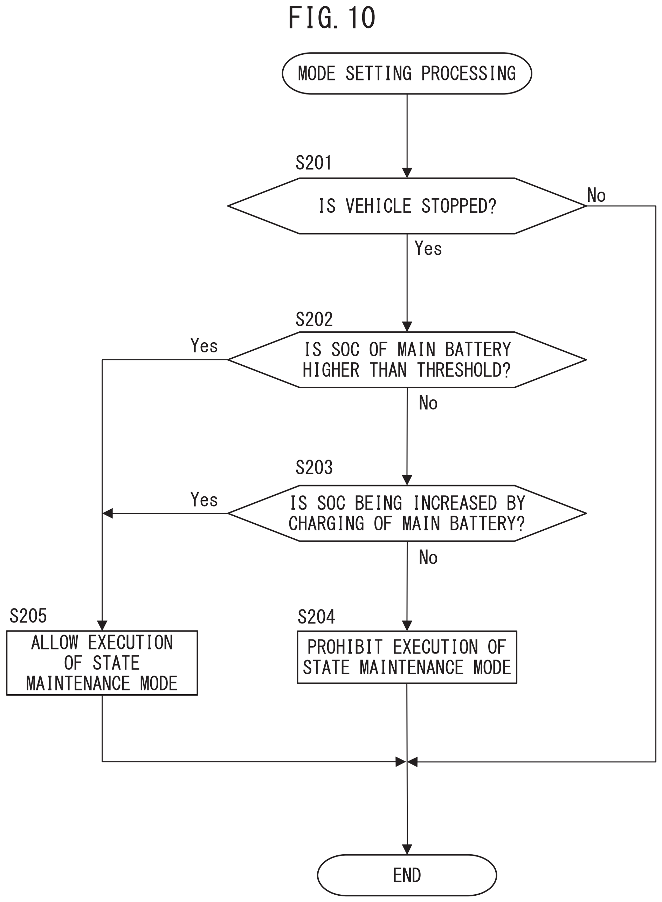

FIG. 10 is a flowchart showing a control routine for mode setting processing of the second embodiment of the present invention. The present control routine is repeatedly executed by the processor 33 of the ECU 30 in accordance with a computer program stored in the memory 32 of the ECU 30.

First, in step S201, in the same manner as step S101 of FIG. 9, the mode setting part 34 of the processor 33 judges whether the vehicle 1 is stopped. When it is judged that the vehicle 1 is not stopped, the present control routine ends.

On the other hand, when it is determined in step S201 that vehicle 1 is stopped, the present control routine proceeds to step S202. In step S202, in the same manner as step S102 of FIG. 9, the mode setting part 34 judges whether the SOC of the main battery 14 is higher than a threshold. When it is determined that the SOC is equal to or less than the threshold, the present control routine proceeds to step S203.

In step S203, the charge state detection part 35 judges whether the SOC of the main battery 14 is being increased due to charging of the main battery 14. For example, the charge state detection part 35 performs this judgment based on change in the SOC of the main battery 14 output by the BMS 9. When it is determined that the SOC of the main battery 14 is not being increased, the present control routine proceeds to step S204.

In step S204, the mode setting part 34 prohibits execution of the state maintenance mode, in the same manner as step S104 of FIG. 9. After step S204, the present control routine ends.

On the other hand, when it is judged that the SOC of the main battery 14 is higher than the threshold in step S202, or when it is judged that the SOC of the main battery 14 is being increased due to charging of the main battery 14 in step S203, the present control routine proceeds to step S205. In step S205, in the same manner as step S105 of FIG. 9, the mode setting part 34 allows execution of the state maintenance mode. After step S205, the present control routine ends.

<Third Embodiment>

The configuration and control of the vehicle mode control device according to the third embodiment are basically identical to the configuration and control of the vehicle mode control device according to the first embodiment, except for the points described below. Thus, the third embodiment of the present invention will be described below, focusing on the differences from the first embodiment.

When the SOC of the main battery 14 recovers to a value higher than the threshold due to charging of the main battery 14, the state maintenance mode can be continued even after charging of the main battery 14. However, when the main battery 14 was charged in preparation for a subsequent trip of the vehicle 1, the user may not wish that the SOC of the main battery 14 decreases due to continued execution of the state maintenance mode.

Thus, in the third embodiment, when charging of the main battery 14 is completed in a state in which the state maintenance mode is being executed, the mode setting part 34 confirms with the user whether to continue the state maintenance mode. As a result, the SOC of the main battery 14 can be prevented from decreasing contrary to the intention of the user after charging of the main battery 14.

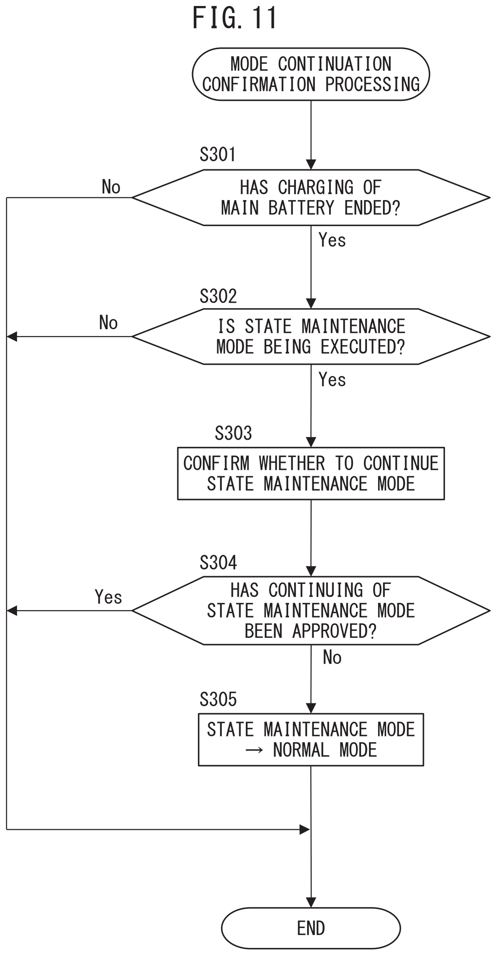

In the third embodiment, in addition to the control routine of mode setting processing shown in FIG. 9, the following control routine of mode continuation confirmation processing is executed. FIG. 11 is a flowchart showing the control routine of mode continuation confirmation processing of the third embodiment of the present invention. The present control routine is repeatedly executed by the processor 33 of the ECU 30 in accordance with a computer program stored in the memory 32 of the ECU 30.

First, in step S301, the mode setting part 34 of the processor 33 judges whether charging of the main battery 14 has completed. When it is determined that charging of the main battery 14 has not completed, the present control routine ends. On the other hand, when it is determined that charging of the main battery 14 has completed, the present control routine proceeds to step S302.

In step S302, the mode setting part 34 judges whether the state maintenance mode is being executed. Specifically, the mode setting part 34 judges whether the mode of the vehicle 1 was set to the state maintenance mode while the main battery 14 was being charged. When it is determined that the state maintenance mode is not being executed, the present control routine ends. On the other hand, when it is determined that the state maintenance mode is being executed, the present control routine proceeds to step S303.

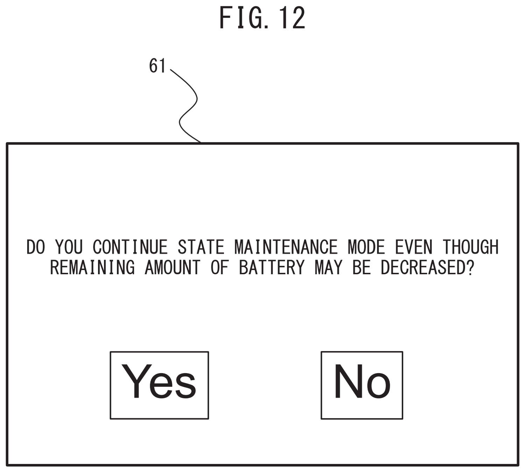

In step S303, the mode setting part 34 confirms with the user whether to continue the state maintenance mode. For example, the mode setting part 34 displays a confirmation screen on the HMI 6 (for example, the MM display 61) to confirm with the user whether to continue the state maintenance mode, and the user selects whether to continue via the HMI 6. FIG. 12 shows an example of the confirmation screen for confirming whether to continue the state maintenance mode. As shown in FIG. 12, when confirming with the user whether to continue the state maintenance mode, the mode setting part 34 may suggest to the user that continuing the state maintenance mode will result in a decrease in the SOC of the main battery 14.

Next, in step S304, the mode setting part 34 judges whether continuing of the state maintenance mode has been approved by the user. For example, if an input approving continuing of the state maintenance mode is made on the HMI 6, the mode setting part 34 judges that continuing of the state maintenance mode has been approved. On the other hand, if an input rejecting continuing of the state maintenance mode is made on the HMI 6, or if no operation is made on the confirmation screen on the HMI 6 for a predetermined time, the mode setting part 34 judges that continuing of the state maintenance mode has been rejected.

When continuing of the state maintenance mode is approved in step S304, the present control routine ends. In this case, the vehicle 1 remains in the state maintenance mode even after the main battery 14 is charged.

On the other hand, when continuing of the state maintenance mode is rejected in step S304, the present control routine proceeds to step S305. In step S305, the mode setting part 34 ends the state maintenance mode and changes the mode of the vehicle 1 from the state maintenance mode to the normal mode. In the normal mode, the power supply state of the vehicle 1 is set in accordance with the power supply state transition described above with reference to FIG. 5. For example, if the fourth trigger occurs when the power supply state is the on-board state, the power supply state transitions from the on-board state to power supply off. After step S305, the present control routine ends.

Note that, in step S303, when the user is outside the vehicle 1, the mode setting part 34 may confirm with the user whether to continue the state maintenance mode via the mobile terminal 200 of the user. In this case, the mode setting part 34 transmits a notification confirming whether to continue the state maintenance mode to the mobile terminal 200 via the server 300, for example, by wide-area wireless communication using the wide-area communication module 2. Furthermore, the mode setting part 34 may transmit a notification confirming whether to continue the state maintenance mode to the mobile terminal 200 by short-range wireless communication using the short-range communication module 3, without passing through the server 300.

In this case, the mode setting part 34 estimates the position of the user based on the communication status of short-range wireless communication between the vehicle 1 and the mobile terminal 200 using the short-range communication module 3. For example, the mode setting part 34 estimates that the user is inside the vehicle 1 when communication between the vehicle 1 and the mobile terminal 200 is secured by short-range wireless communication, and estimates that the user is outside the vehicle 1 when communication between the vehicle 1 and the mobile terminal 200 by short-range wireless communication is interrupted. The mode setting part 34 may estimate the position of the user by acquiring position information of the mobile terminal 200 via wide-area wireless communication using the wide-area communication module 2. In this case, for example, the output of a GNSS (Global Navigation Satellite System) receiver installed in the mobile terminal 200 is acquired as the position information of the mobile terminal 200. The mode setting part 34 may estimate the position of the user based on the output of an in-vehicle camera, seating sensor, etc., provided in the vehicle 1.

### <Fourth Embodiment>

The configuration and control of the vehicle mode control device according to the fourth embodiment are basically identical to the configuration and control of the vehicle mode control device according to the first embodiment, except for the points described below. Thus, the fourth embodiment of the present invention will be described below, focusing on the differences from the first embodiment.

In the fourth embodiment, when charging of the main battery 14 is completed in a state in which the state maintenance mode is being executed, the mode setting part 34 continues the state maintenance mode when the SOC of the main battery 14 is equal to or greater than a predetermined value, and ends the state maintenance mode when the SOC of the main battery 14 is less than the predetermined value. As a result, it is possible to prevent a decrease in the SOC of the main battery 14 due to continuing of the state maintenance mode after charging of the main battery 14, though the SOC of the main battery 14 has not been sufficiently recovered by charging of the main battery 14.

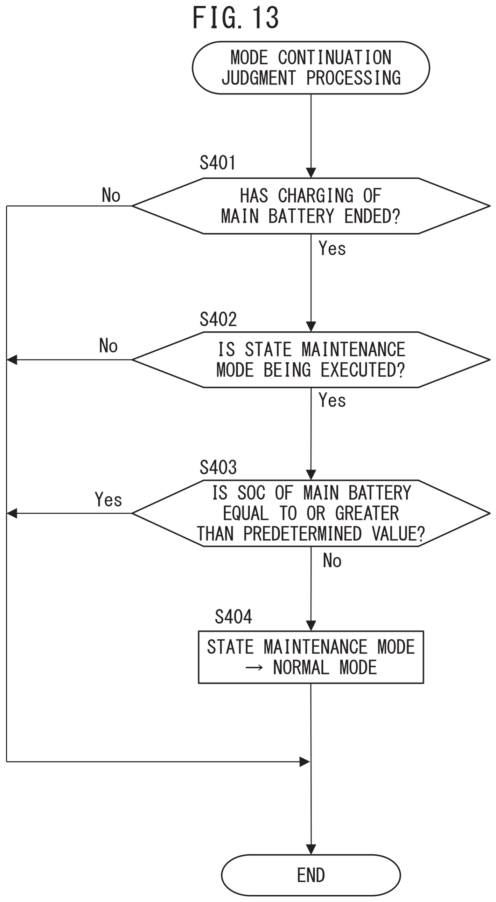

In the fourth embodiment, in addition to the control routine of mode setting processing shown in FIG. 9, the following control routine of mode continuation judgment processing is executed. FIG. 13 is a flowchart showing the control routine of mode continuation judgment processing of the fourth embodiment of the present invention. The present control routine is repeatedly executed by the processor 33 of the ECU 30 in accordance with a computer program stored in the memory 32 of the ECU 30.

Steps S401 and S402 are executed in the same manner as steps S301 and S302 of FIG. 11. When it is judged in step S402 that the state maintenance mode is being executed, the present control routine proceeds to step S403.

In step S403, the mode setting part 34 judges whether the SOC of the main battery 14 is equal to or greater than a predetermined value. At this time, the mode setting part 34 obtains the SOC calculated by the BMS 9 and compares the SOC with the predetermined value. The predetermined value is set to a value higher than the threshold at which the state maintenance mode ends. The difference between the threshold and the predetermined value is set to, for example, 10% to 30%.

When it is determined in step S403 that the SOC of the main battery 14 is equal to or greater than the predetermined value, the present control routine ends. In this case, the vehicle 1 remains in the state maintenance mode even after the main battery 14 is charged.

On the other hand, when it is determined in step S403 that the SOC of the main battery 14 is less than the predetermined value, the present control routine proceeds to step S404. In step S404, in the same manner as step S305 of FIG. 11, the mode setting part 34 ends the state maintenance mode and changes the mode of the vehicle 1 from the state maintenance mode to the normal mode. After step S404, the present control routine ends.

<Other Embodiments>

Though the preferred embodiments of the present invention have been described above, the present invention is not limited to these embodiments, and various modifications and changes can be made within the scope of the claims. For example, the air conditioner 7 may be included in the auxiliary devices 18 and may be supplied with power from the auxiliary battery 17.

Furthermore, the vehicle 1 may be a plug-in hybrid electric vehicle (PHEV) including a motor and an engine as drive devices. Also, the vehicle may be an autonomous vehicle in which at least a part of acceleration, braking, and steering of the vehicle 1 are automatically executed.

Furthermore, though explanation is given on the assumption that a screen relating to the state maintenance mode is displayed on the MM display 61 in the vehicle 1 in the embodiments described above, such a screen may be displayed on another display (for example, the meter display 62, the left-side operation display 63, the right-side operation display 64, or an unillustrated heads-up display (HUD)) of the vehicle 1. Furthermore, at least one of the left-side operation display 63 and the right-side operation display 64 may be omitted from the vehicle 1.

Furthermore, other conditions may be used for the first to fourth triggers for transitioning the power supply state of the vehicle 1. For example, the first trigger for transitioning the power supply state of the vehicle 1 from the power supply off state to the on-board state may be the pressing of the start switch 5, etc. Furthermore, a part of the first to fifth end conditions may be omitted.

Furthermore, the server 300 or the like provided outside the vehicle 1 may function as the vehicle mode control device. In this case, necessary information is transmitted from the vehicle 1 to the server 300, and the ECU 30 of the vehicle 1 performs vehicle control related to the mode setting of the vehicle 1 in response to instructions from the server 300.

Furthermore, the second embodiment can be executed in combination with the third or fourth embodiment. In this case, in the third or fourth embodiment, the control routine of mode setting processing of FIG. 10 is executed in place of the control routine of mode setting processing of FIG. 9.

The computer program that causes a computer to realize the functions of each part of the processor 33 of the ECU 30 or the processor of the server may be provided in a form stored in a computer-readable recording medium or in a form included in a computer program product. The computer-readable recording medium is, for example, a magnetic recording medium, an optical recording medium, or a semiconductor memory.

### REFERENCE SIGNS LIST

- 1: vehicle
- 6: HMI
- 7: air conditioner
- 14: main battery
- 30: electronic control unit (ECU)
- 33: processor
- 34: mode setting part
- 35: charge state detection part

## Claims

1. A vehicle mode control device for controlling a mode of a vehicle (1), comprising:
a mode setting part (34) configured to set the mode of the vehicle (1) to a state maintenance mode for maintaining a vehicle state in which power is supplied to an air conditioner (7) of the vehicle (1) and a display in the vehicle (1) but not to a drivetrain of the vehicle (1) based on an instruction from a user of the vehicle (1); and
a charge state detection part (35) configured to detect a charge state of a main battery (14) of the vehicle (1), wherein
the mode setting part (34) is configured to allow execution of the state maintenance mode regardless of a value of an SOC of the main battery (14), when the main battery (14) of the vehicle (1) is being charged.

2. The vehicle mode control device according to claim 1, wherein the mode setting part (34) is configured to allow execution of the state maintenance mode regardless of the value of the SOC, when the SOC is being increased due to charging of the main battery (14).

3. The vehicle mode control device according to claim 1 or 2, wherein when the state maintenance mode is being executed during charging of the main battery (14), the charge state detection part (35) is configured to display on the display the value of the SOC, which changes in accordance with charging of the main battery (14).

4. The vehicle mode control device according to any one of claims 1 to 3, wherein when charging of the main battery (14) is completed in a state in which the state maintenance mode is being executed, the mode setting part (34) is configured to confirm with the user whether to continue the state maintenance mode.

5. The vehicle mode control device according to claim 4, wherein when the user is outside the vehicle (1), the mode setting part (34) is configured to confirm with the user whether to continue the state maintenance mode via a mobile terminal (200) of the user.

6. The vehicle mode control device according to any one of claims 1 to 3, wherein when charging of the main battery (14) is completed in a state in which the state maintenance mode is being executed, the mode setting part (34) is configured to continue the state maintenance mode when the SOC is equal to or greater than a predetermined value, and end the state maintenance mode when the SOC is less than the predetermined value.

7. A vehicle mode control method executed by a computer, comprising:
setting a mode of a vehicle (1) to a state maintenance mode for maintaining a vehicle state in which power is supplied to an air conditioner (7) of the vehicle (1) and a display within the vehicle (1) but not to a drivetrain of the vehicle (1) based on an instruction from a user of the vehicle (1);
detecting a charge state of a main battery (14) of the vehicle (1); and
allowing execution of the state maintenance mode regardless of a value of an SOC of the main battery (14), when the main battery (14) of the vehicle (1) is being charged.

8. A computer program causing a computer to:
set a mode of a vehicle (1) to a state maintenance mode for maintaining a vehicle state in which power is supplied to an air conditioner (7) of the vehicle (1) and a display within the vehicle (1) but not to a drivetrain of the vehicle (1) based on an instruction from a user of the vehicle (1);
detect a charge state of a main battery (14) of the vehicle (1); and
allow execution of the state maintenance mode regardless of a value of an SOC of the main battery (14), when the main battery (14) of the vehicle (1) is being charged.
